# EUROPEAN PATENT APPLICATION

(11) **EP 3 657 095 A1**
(43) Date of publication of application: **27.05.2020**
(21) Application number: 19210514.6
(22) Date of filing: 21.11.2019
(51) Int. Cl.: F24V 99/00, C25B 15/08, C25B 1/04

(54) **METHOD FOR GENERATING HEAT FROM WATER ELECTROLYSIS**

(30) Priority: 21.11.2018 NL 2022045
(71) Applicant: Green Vision Holding B.V., 6827 AV Arnhem (NL)
(72) Inventor: DE WIT, Ellart Kostijn, 3931 HV WOUDENBERG (NL); MIRABELLI, Ilaria, 6811 EN ARNHEM (NL)
(74) Representative: van Dam, Vincent

(57) **Abstract**

The present invention relates to a method and a system for generating heat from water and electricity. The present invention is based on the principle that water can be electrolysed to produce hydrogen and oxygen. The hydrogen produced by this electrolysis process can be directly used as a fuel to produce heat. The present invention provides a method and a system for generating heat from water and electricity which does not make use of fossil energy, which produces zero carbon emission and which is capable of achieving the high temperatures required for industrial processes.

## Description

The present invention relates to a method and a system for generating heat from water and electricity.

### Introduction

Industrial processes often require heating systems that are capable of generating high temperatures. Such heating systems often require a high input of a fossil energy source, such as natural gas. At the same time such industrial processes involve high carbon dioxide emissions. In the present time of environmental consciousness there is a continuous need for more sustainable heating sources.

Such sustainable heating sources may for instance be driven by electricity. A major drawback of the use of conventional electric heating systems is that these are not capable of generating high temperatures on an industrial scale (i.e. 100 kW and more), as is for instance required for industrial processes such as steel processing, cement processing, glass processing, etc.

### Summary of the invention

The present invention provides a method and systems capable of generating heat from water and electricity which does not make use of fossil energy, which produces zero carbon emission and which is capable of achieving the high temperatures required for industrial processes of 100 kW and more.

In a first aspect the invention therefore relates to an industrial process of 100 kW or more, comprising generating heat, wherein generating heat comprises the steps of i) providing a preheated steam; ii) passing said preheated steam to an electrolyser and applying an electric current through said preheated steam in said electrolyser, thereby electrolytically generating hydrogen and oxygen; iii) passing at least part of the generated hydrogen from said electrolyser to a burner; and iv) burning said hydrogen, thereby generating heat.

In a second aspect the invention relates to a system for generating heat from water and electricity and having a capacity of 100 kW or more, comprising a first section comprising at least one heater for heating water to a preheated steam; a second section in fluid connection with said first section for receiving said preheated steam and comprising an electrolyser for generating hydrogen and oxygen from said preheated steam; and a third section in fluid connection with said second section for receiving generated hydrogen from the second section and comprising a burner for burning said hydrogen.

In a third aspect the invention relates to a system for processing a raw material into a product or semi-finished product, comprising the system of the second aspect, wherein said system of the second aspect is configured to provide heat to said raw material in order to obtain said product or semi-finished product.

The systems of the invention can be applied to carry out the method of the invention.

### Short description of the drawings

Fig.1 shows a schematic representation of an exemplary embodiment of a system according to the second aspect of the invention.
Fig. 2 shows a schematic representation of another exemplary embodiment of the system of the second aspect of the invention.
Fig. 3 shows a schematic representation of another exemplary embodiment of the system of the second aspect of the invention.
Fig. 4 shows a schematic representation of another exemplary embodiment of the system of the second aspect of the invention.
Fig. 5 shows a schematic representation of another exemplary embodiment of the second aspect of the invention.

### Detailed description of the invention

The present invention is based on the principle that water can be electrolysed to produce hydrogen and oxygen. The hydrogen generated by this electrolysis process can be directly used as a fuel to produce heat. The inventors have found that if as a water source for electrolysis a preheated steam is used, burning the produced hydrogen leads to the achievement of temperatures sufficient to be applied in large scale industrial processes of 100 kW and higher and including processes in the megawatt range. This way temperatures of up to 3000°C can be reached while using only electricity and water as direct energy sources with high efficiency and without any carbon dioxide emission. Furthermore, the use of hot steam for electrolysis lowers the required amount of electric energy input for electrolysing water to hydrogen and oxygen, making the electrolysis process also very energy efficient.

The invention relates in particular to industrial processes of 100 kW and higher, such as in the megawatt range. This means that the industrial process requires an power input of 100 kW and higher. Accordingly, a system for providing heat according to the invention should therefore have a capacity of 100 kW and higher.

The electricity required for the method and system of the invention can be obtained from any suitable source, such as hydroelectricity, solar energy, wind energy, geothermal energy, nuclear power, etc. For instance, it may be well possible to couple a windmill to the system of the invention to provide the required electricity.

In the system of the invention in a first section the preheated steam is produced, in a second section the preheated steam is electrolysed to oxygen and hydrogen and in a third section the hydrogen is burned to produce heat.

In accordance with the invention a preheated steam is provided before passing said preheated steam to an electrolyser and applying an electric current through said preheated steam.

It is preferred that the steam is preheated to a temperature of up to 850ºC, because that leads to higher flame temperature and consequently increased heat production. Higher steam temperatures than 850°C are in general not preferred because this makes operation of the process of the invention difficult, for instance because electrolysers may not be resistant to such higher temperatures and because the oxygen produced by electrolysis is very corrosive at these temperatures. In a preferred embodiment the steam is preheated to a temperature between 500º to 850ºC, more preferably between 600ºC and 850ºC, such as between 600ºC and 800ºC because these are operational temperatures of solid oxide electrolysers, which are very suitable as electrolysers within the scope of the invention.

Producing a preheated steam may be performed by conventional methods known in the art. It is however preferred in order to produce steam with the above mentioned preferred temperatures of up to 850ºC, that the step of providing a preheated steam comprises superheating a steam to produce a superheated steam. The preheated steam in this case is a superheated steam. In accordance, it is preferred that in the system according to the invention said first section comprises a superheater. A superheated steam is a steam with a temperature above its evaporating temperature, and which can be used in electrolysis. Starting with a liquid water source, a superheated steam can be produced by pressurizing water; evaporating said pressurized water to a steam; and superheating said steam to obtain a preheated steam, i.e. a superheated steam. Therefore the step of providing a preheated steam in the process according to the invention may suitably comprise the steps of pressurizing water; evaporating said pressurized water to a steam; and superheating said steam to obtain a superheated steam. For this purpose the first section of the system of the invention may comprise means for pressurizing water, such as a pump, a heat exchanger in fluid connection with said means for pressurizing water and configured for receiving pressurized water from said means for pressurizing water and evaporating said pressurized water to steam; and a superheater in fluid connection with said heat exchanger and configured for receiving said steam and superheating said steam.

Electrolysis of the preheated steam is preferably carried out by means of solid oxide electrolyser (SOE electrolyser). In accordance with the invention the solid oxide electrolyser uses a solid oxide or ceramic electrolyte to produce oxygen and hydrogen gas by electrolysis of water. Solid oxide electrolysers are preferred, because these electrolysers are capable of electrolysing at high temperatures. A solid oxide electrolyser will in general be able to electrolyse steams with a temperature between 500º to 850ºC. This makes it possible to generate high temperature hydrogen, which on its turn has an advantageous effect on the temperature to be reached upon burning the hydrogen, because the higher the temperature of the produced hydrogen is, the higher the flame temperature and thus the eventual temperature of the heat produced upon burning the hydrogen is.

As mentioned above, electrolysis of the preheated steam results in the production of oxygen and hydrogen. The conversion of steam is in general not complete. Under operational circumstances in general approximately 50 vol.% of the steam is converted by electrolysis. As a result, the produced hydrogen will be in a gas mixture of steam and hydrogen. It is possible to increase the concentration of hydrogen in this gas mixture by recycling and/or subjecting the gas mixture to another round of electrolysis. For this purpose the electrolyser may be equipped with recycling means to recycle a hydrogen/steam mixture back into the electrolyser. It is also possible to use an additional electrolyser. Such a further electrolysis step may lead to a hydrogen/steam mixture with up to 75 vol.% hydrogen. This way less preheated steam has to be provided in step i) of the method of the invention. Moreover, the higher concentration of hydrogen leads to higher burning efficiency. Upon electrolysis the produced oxygen ions are drawn to the anode of the electrolyser resulting in oxygen gas which can be separated and passed out of the electrolyser. Therefore the method according to the invention preferably comprises separating and collecting the generated oxygen from the electrolyser; and passing a gas mixture of steam and generated hydrogen from said electrolyser to the burner. For this purpose the electrolyser preferably comprises means for separating generated oxygen from the electrolyser and a first outlet for passing the generated oxygen out of the electrolyser; and a second outlet for passing a gas mixture of steam and generated hydrogen from said electrolyser to said burner.

In order to increase the hydrogen concentration in the gas mixture of steam and hydrogen, the steam may be condensed out of the mixture to a certain extent. However, as this would lower the temperature of the gas mixture at the burner and thus the eventual temperature of the produced heat, care should be taken that the temperature does not decrease too much.

The pressure of the preheated steam may vary depending on the specific application and embodiment used. According to the present invention the produced hydrogen is burned. Any pressure that is sufficient to enable transport of the produced hydrogen and optionally air or produced oxygen to the burner will be suitable. In general, burners only require low pressure fuel because many burners have atmospheric combustion chambers. The gas or gas mixture entering the burner may therefore for instance have a minimal pressure of between 100 mbar to 2 bar. Such low pressures may also be advantageous for the stability in a solid oxide electrolyser.

In other embodiments it may be favourable to use preheated steam with high pressure, for instance up to 15 bar. If high pressure steam is used, it is preferred that the method according to the invention further comprises a step of depressurizing said gas mixture of steam and generated hydrogen, prior to passing said gas mixture to said burner. For this purpose the system according to the invention may be equipped with a fourth section between the second and third section and in fluid connection therewith, wherein the fourth section comprises a means for depressurizing gas from the electrolyser. Such high pressures may for instance be useful for generating energy during the method of the invention, for instance by using a turbine. Said fourth section may therefore suitably comprise a turbine for depressurizing gas from the electrolyser. The hot mixture of hydrogen and steam will be passed over the turbine while power is generated, although this may lead to a small decrease in temperature, the gas mixture will now have a pressure perfectly suitable for combustion in an atmospheric combustion chamber.

In a preferred embodiment of the invention a part of the produced heat is used for producing said preheated steam. The use of hot steam - heated by recycling heat from the same process - for electrolysis lowers the required amount of electric energy input for electrolysing water to hydrogen and oxygen, making the electrolysis process also very energy efficient, while at the same time only a limited amount of external energy is needed to produce the preheated steam. This increases energy efficiency.

Burning the hydrogen will produce flue gas. The flue gas may be recycled back from the burner area to the first section of the system to be used in producing preheated steam. It is therefore in particularly preferred that flue gas produced after burning the hydrogen generated by the electrolyser is used to preheat steam in step i) of the method of the invention. This further increases energy efficiency. In accordance, the system according to the invention may further comprise means to transfer heat and/or flue gas from said burner to said first section. This may be realized by using the flue gas produced upon burning hydrogen to heat the heating system used for making preheated steam. Afterwards the condensed steam can be added to the water feed used to produce the preheated steam. The heating system in this case may comprise a condensing heat exchanger.

In order to optimize hydrogen combustion it is preferred to feed the burner with an air mixture enriched in oxygen. It is preferred that for this purpose the oxygen generated in the electrolyser is separated and collected from the electrolyser and diluted with air to obtain an air mixture enriched in oxygen, wherein said air mixture enriched in oxygen is fed to the burner for burning the hydrogen. For this purpose, the system according to the invention may further comprise an air inlet and mixing means for mixing air with the generated oxygen from the electrolyser to generate an air mixture enriched in oxygen, located downstream of the first outlet of the electrolyser; and means for passing said air mixture enriched in oxygen from said mixing means to said burner. The oxygen produced during the electrolysis step in this embodiment will have a high temperature and may therefore be used to preheat the air mixture prior to being supplied to said burner, which further contributes to achieving high temperatures. On the other hand, mixing the oxygen with air will quench the oxygen temperature and lead to less corrosion problems. In view of this may be preferred that the hot oxygen is mixed with air directly after leaving the electrolyser.

It is also possible to preheat the air before mixing it with the oxygen to a certain extent, for instance between 120°C and 150°C. Such temperatures will still have a quenching effect on the hot oxygen from the electrolyser.

It is also possible that the resulting oxygen enriched air mixture is subjected to heating after mixture of oxygen and air, because the diluted oxygen in the air mixture will be less corrosive compared to pure oxygen. A high temperature oxygen enriched air mixture will on its turn be advantageous for the flame temperature upon burning hydrogen.

Suitable oxygen enriched air mixtures may comprise oxygen in a concentration of 22 - 60 %, such as between 25 and 60 %, such as 50 % by volume. It is also possible to use pure oxygen (i.e. 100 vol. % oxygen) or to use the oxygen from the electrolyser directly, although precautions should be taken in view its corrosive properties. Such precautions may comprise cooling the oxygen and/or using corrosion resistant materials, such as metallic alloys such as FeCrAl alloys or alumina based ceramics which are commercially available. A higher oxygen concentration in the enriched air mixture also leads to higher burning efficiency of the hydrogen, which further increases flame temperature, heat production and energy efficiency. It also leads to lower NOₓ production.

The present invention may be applied in large industrial settings which require high temperatures for heating materials in order to process them to a product or semi-finished product.

Therefore, in a preferred embodiment the industrial process according the invention comprises processing a raw material into a product or semi-finished product, wherein said raw material is exposed to heat generated as defined in steps i)-iv) of the above defined method of the invention.

Such industries include glass, cement and steel industries. Accordingly, said raw material may suitably be selected from the group consisting of glass raw material, cement raw material and steel raw material. Accordingly the method of the invention may further comprise a step of applying the produced heat to heat a material selected from the group consisting of glass, cement and steel raw materials. In particular the production of cement and steel require high temperatures and high energy input. For this reason heat produced in accordance with the invention is preferably used to heat cement or steel raw materials in order to product cement (or semi-finished cement, such as kiln) or steel, respectively. In view of this it is preferred that the burner is comprised in a furnace or is part of a furnace.

### Detailed description of the drawings

The invention will now be further elucidated in the attached drawings. The following explanation is meant to illustrate and explain the invention and not to limit the claims.

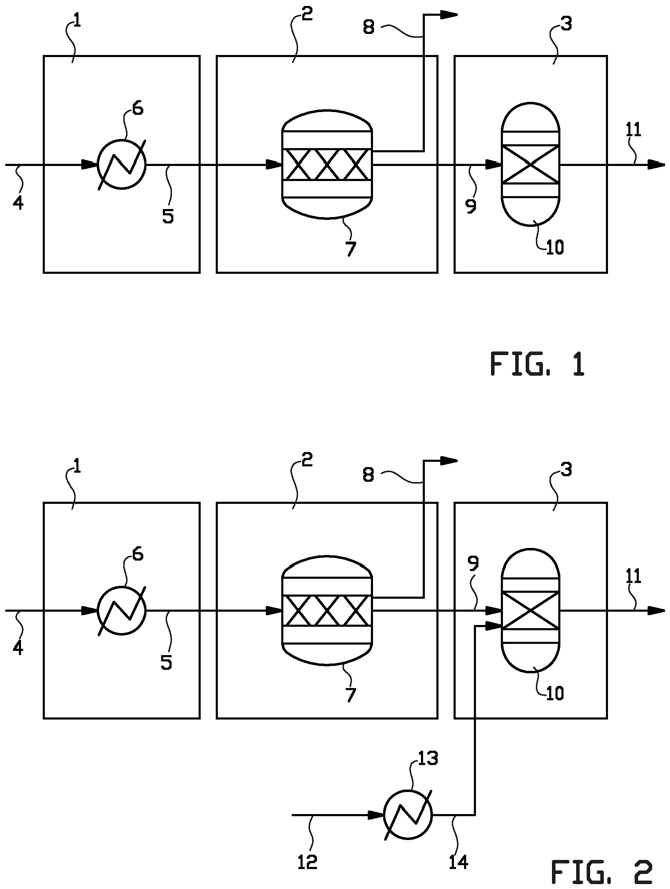

Fig. 1 shows a schematic drawing of an embodiment of the system of the invention. The system comprises three sections 1, 2, 3. In this system in first section 1 the preheated steam is produced, in second section 2 the preheated steam is electrolysed to oxygen and hydrogen and in third section 3 the hydrogen is burned to produce heat.

The first section 1 comprises a heater 6 configured to receive water from water line 4. Heater 6 is configured to heat water to a preheated steam. Subsequently the preheated steam is passed to a second section 2, via steam line 5. Section 2 comprises an electrolyser 7. A voltage is applied over the anode and cathode electrodes of electrolyser and electric current is passed through the steam. This results in formation of hydrogen and oxygen from said preheated steam at the cathode side of the electrolyser 7. The oxygen moves to the anode side of the electrolyser where it leaves the electrolyser via oxygen line 8. A gas mixture of hydrogen generated in the electrolyser 7 and steam is passed via gas mixture line 9 to a burner 10 in third section 3. The third section 3 may suitably encompass a furnace in which the burner 10 is placed. The burner in this embodiment uses air from the surroundings. At the burner 10 the hydrogen is ignited and burned to generate heat 11. With a 40% oxygen excess with regard to the stoichiometric ratios at the burner 11 a temperature of up to 1500°C can be reached upon burning the hydrogen.

Fig. 2 shows another embodiment of the system of the invention. The system of Fig. 2 differs from the system shown in Fig.1 in that it comprises heating means 13 configured to heat air prior to being supplied to said burner. For this purpose air is supplied via air line 12 to heater 13. Heater 13 is configured to heat air. The heated air is then passed via heated air line 14 to burner 10. At the burner 10 the hydrogen is ignited and burned to generate heat, using the preheated air as oxygen source. The use of preheated air for this purpose further increases the temperature of the flame produced by burning the hydrogen. With preheating the air to 120°C and a 40% oxygen excess with regard to the stoichiometric ratios at the burner 11 a temperature of up to 1600°C can be reached upon burning the hydrogen.

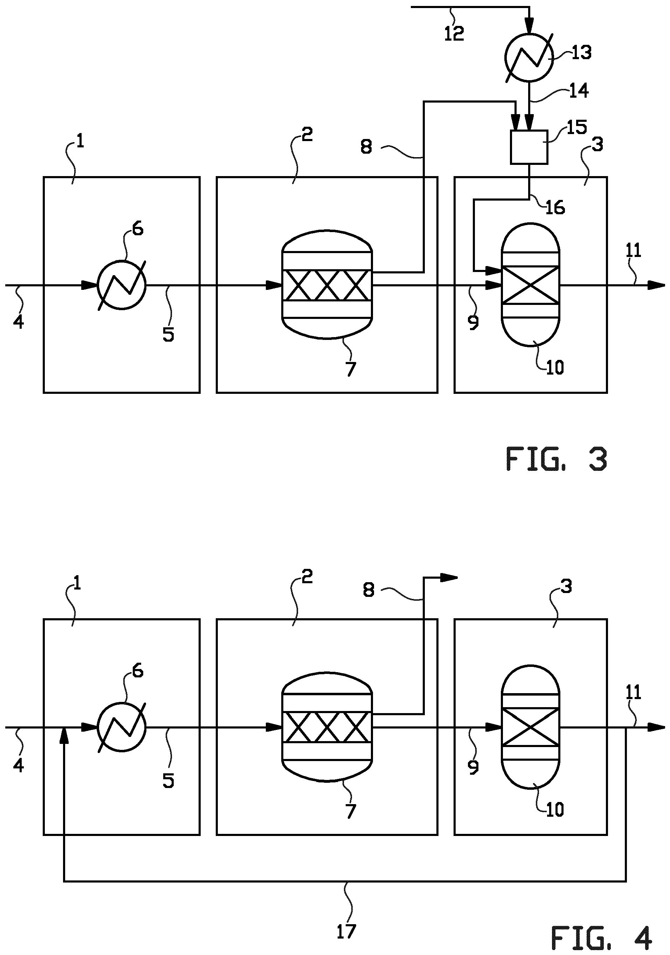

Fig. 3 shows another embodiment of the system of the invention. The system of Fig. 3 differs from the system shown in Fig.1 in that it is configured to use the oxygen produced during electrolysis to produce an air mixture enriched in oxygen. For this purpose oxygen is passed via oxygen line 8 to a mixer 15 where it is mixed with preheated air from heated air line 14 to obtain an oxygen enriched air mixture (e.g. 50 vol.% oxygen). The resulting oxygen enriched air is then passed via line 16 to the burner 10 and used as oxygen source to burn hydrogen. The oxygen produced during the electrolysis step in this embodiment will have a high temperature and may therefore in combination with the preheated air further increase the temperature during heat production. In addition, the higher oxygen concentration in the enriched air leads to higher burning efficiency of the hydrogen, which further increases flame temperature and energy efficiency. With preheating the oxygen enriched air to 120°C and a 40% oxygen excess with regard to the stoichiometric ratios at the burner 11 a temperature of up to 2400°C can be reached upon burning the hydrogen.

Fig. 4 shows another embodiment of the system of the invention. The system of Fig. 4 differs from the system shown in Fig.1 in that it is configured to re-use the flue gas produced after burning the hydrogen. For this purpose the system comprises line 17 to transfer heat and flue gas from said burner back to first section 1. This can be done by using the flue gas 11 produced upon burning hydrogen to heat heater 6. Afterwards the condensed steam can be added to the water feed used to produce the preheated steam. The heater 6 in this case may be a condensing heat exchanger. Line 17 can be equipped with any means suitable to transport flue gas to the heater, e.g. pump, compressor, etc. Re-using flue gas increases energy efficiency.

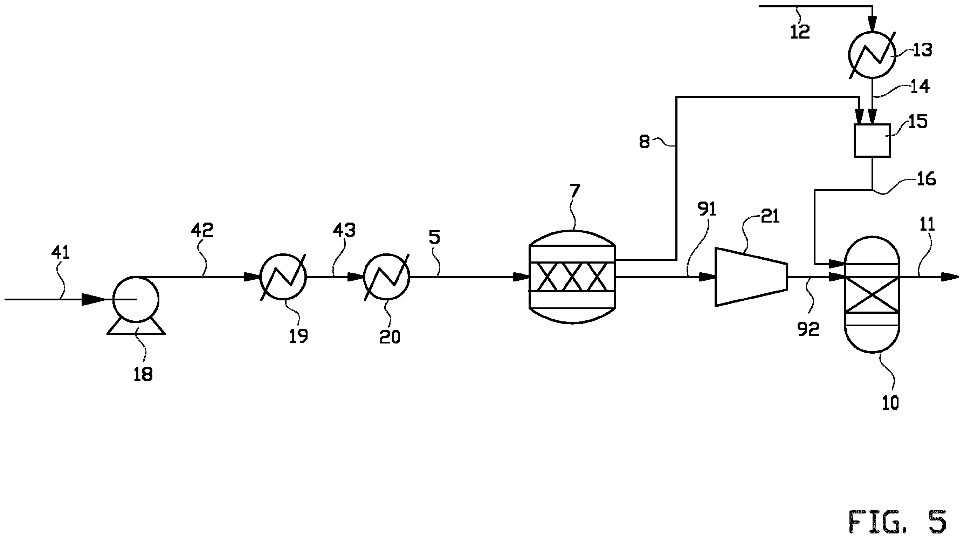

Fig. 5 shows another exemplary embodiment of the system of the invention. In this embodiment water is passed via line 41 to a pump 18. Pump 18 pressurises the water to a pressure of approximately 15 bar. Subsequently the pressurised water is transported via line 42 to heat exchanger 19. In the heat exchanger the water is evaporated to a temperature of approximately 200°C. This steam is passed to superheater 20 via line 43, where the steam is further heated to a temperature of 850°. The superheated steam is produced by using electrical power, with efficiency of 95%. The superheated steam is transported to electrolyser 7 via line 5. The electrolyser in this embodiment is a solid oxide electrolyser (SOE). A voltage is applied over the anode and cathode electrodes the SOE electrolyser 7 and electric current is passed through the superheated steam. This results in formation of hydrogen and oxygen ions from said preheated steam at the cathode side of the SOE electrolyser 7. Electrolysis in this embodiment leads to steam conversion of 50%. The oxygen ions move to the anode side of the electrolyser where, after donating electrons at the anode, oxygen leaves the electrolyser via oxygen line 8 at a temperature of 850°C. Some sweep air into the anode may be used to avoid to produce pure oxygen, which is very corrosive at these temperatures. On the other side of the SOE electrolyser 7 a gas mixture of hydrogen and steam leaves the electrolyser 7 and is passed from SOE electrolyser 7 via gas mixture line 91 to a turbine 21. By passing this gas mixture over turbine 21 a (shaft) power of approximately 160 kWatt is generated, while the gas mixture cools down to approximately 546°C and lowering the pressure of the gas mixture to 2 bar. This is then passed via line 92 to the burner 10 where it is mixed with preheated air enriched in oxygen and burned to generate heat 11. In order to generate preheated air enriched in oxygen, the hot oxygen obtained from the SOE electrolyser is passed to mixer 15 via line 8. The preheated air is produced in heater 13 which receives air with a pressure of 2 bar from line 12. After heating the air in heater 13 to 120°C the hot air is passed to mixer 15 via line 14. In mixer 15 the oxygen from line 8 is mixed with the preheated air from line 14. The resulting oxygen enriched air is passed to burner 10 via line 16. In burner 10 the oxygen enriched air and the hydrogen/steam mixture are mixed in an oxygen excess of ca. 40% with respect to the stoichiometric ratios to generate heat 11 with a temperature of up to 2400°C.

Calculations have been performed on the embodiment shown in Fig.5. The calculations are based on 1000 kg/h of water (1240 Nm³/h of steam), assuming an SOE operating at 15 bar and 850°C and a requirement of obtaining a temperature of at least 2400°C. A summary is shown in Table 1 below.

**Table 1: calculations on the system shown in Fig.5 (heat losses are not taken into account).**

| | Specs | Power (kWatt) | Output |
|---|---|---|---|
| Water pump | Up to 15 bar abs | 1.5 | |
| Evaporator | @ Tsat (= 200°C) | 810 | |
| Steam superheating | Up to 850°C | 420 | |
| SOE | 15 bar abs and 850°C | 2000 | 300 Nm³/h (14 kmol/h) of O₂ 630 Nm³/h (28 kmol/h) of H₂ 630 Nm³/h (28 kmol/h) of steam |
| | 50% of steam conversion | | |
| | Thermoneutral operation (Tᵢₙ=Tₒᵤₜ) | | |
| | Cell voltage = 1.3 V | | |
| | Current density =100 A | | |
| Turbine | Gas expansion from 15 to ca. 1.5 bar abs | -160 | |
| Burner | Oxygen excess at the burner ca. 40% | | Flow rate = 2200 Nm³/h (2347 kg/h) Outlet combusted gas temperature > 2400°C |
| | Preheated air (∼ 120°C) is fed to the burner) | | |
| ***TOTAL*** | | **∼ 3000** | |

Based on the calculation in Table 1 it is estimated that to obtain 2200 Nm³/h of hot gas at a temperature of higher than 2400°C ca. 3.0 MWatt would be required with this system. Conventional electric heaters need similar input but are not able to reach these high temperatures.

Furthermore, if the embodiment in Fig.5 is combined with recirculation of flue gas produced upon burning the hydrogen this will save the 810 kW in above table 1, so that only 2.2 MWatt would be required for this system.

Having described and illustrated the principles of the present invention in the detailed description and accompanying drawings, it will be recognized that the various embodiments can be modified in arrangement and detail without departing from these principles. Furthermore, any features or aspects of the disclosed embodiments can be used in various combinations and subcombinations with one another.

## Claims

1. Industrial process of 100 kW or more, comprising generating heat, wherein generating heat comprises the steps of
i) providing a preheated steam;
ii) passing said preheated steam to an electrolyser and applying an electric current through said preheated steam in said electrolyser, thereby electrolytically generating hydrogen and oxygen;
iii) passing at least part of the generated hydrogen from said electrolyser to a burner; and
iv) burning said hydrogen, thereby generating heat.

2. Industrial process according to claim 1, wherein said industrial process comprises processing a raw material into a product or semi-finished product, wherein said raw material is exposed to heat generated as defined in steps i)-iv) of claim 1.

3. Industrial process according to claim 2, wherein said raw material selected from the group consisting of glass raw material, cement raw material and steel raw material.

4. Method according to any of the previous claims, wherein the step of providing a preheated steam comprises:
i-a) pressurizing water;
i-b) evaporating said pressurized water to a steam; and
i-c) superheating said steam to obtain a preheated steam.

5. Method according to any of the previous claims, comprising:
separating and collecting the generated oxygen from the electrolyser; and
passing a gas mixture of steam and generated hydrogen from said electrolyser to said burner.

6. Method according to any of the previous claims, further comprising a step of depressurizing said gas mixture of steam and generated hydrogen, prior to passing said gas mixture to said burner; and/or wherein preheated air is fed to the burner.

7. Method according to any of the previous claims, wherein the oxygen generated in the electrolyser is separated and collected from the electrolyser and diluted with air to obtain an air mixture enriched in oxygen, and wherein said air mixture enriched in oxygen is fed to said burner for burning said hydrogen.

8. System for generating heat from water and electricity and having a capacity of 100 kW or more, comprising:
a first section comprising at least one heater for heating water to a preheated steam;
a second section in fluid connection with said first section for receiving said preheated steam and comprising an electrolyser for generating hydrogen and oxygen from said preheated steam; and
a third section in fluid connection with said second section for receiving generated hydrogen from the second section and comprising a burner for burning said hydrogen.

9. System according to claim 8, wherein said first section comprises
a means for pressurizing water,
a heat exchanger in fluid connection with said means for pressurizing water and configured for receiving pressurized water from said means for pressurizing water and evaporating said pressurized water to steam; and
a superheater in fluid connection with said heat exchanger and configured for receiving said steam and superheating said steam.

10. System according to any of the claims 8 or 9, wherein said electrolyser comprises:
means for separating generated oxygen from the electrolyser and a first outlet for passing the generated oxygen out of the electrolyser; and
a second outlet for passing a gas mixture of steam and generated hydrogen from said electrolyser to said burner.

11. System according to any of the claims 8 to 10, comprising a fourth section between the second and third section and in fluid connection therewith, wherein the fourth section comprises a means for depressurizing gas from the electrolyser, preferably wherein said fourth section comprises a turbine for depressurizing gas from the electrolyser.

12. System according to any of the claims 8 to 11, further comprising heating means configured to heat air prior to being supplied to said burner.

13. System according to any of the claims 8 to 12, further comprising
an air inlet and mixing means for mixing air with generated oxygen from the electrolyser to generate an air mixture enriched in oxygen, located downstream of the first outlet of the electrolyser; and
means for passing said air mixture enriched in oxygen from said mixing means to said burner.

14. System for processing a raw material into a product or semi-finished product, comprising the system of any of the claims 8 to 13, wherein the latter system is configured to provide heat to said raw material in order to obtain said product or semi-finished product.

15. System for processing a raw material into a product or semi-finished product according to claim 14, wherein said raw material is selected from the group consisting of glass raw material, cement raw material and steel raw material.
